# EUROPEAN PATENT APPLICATION

(11) **EP 4 674 685 A1**
(43) Date of publication of application: **07.01.2026**
(21) Application number: 25183294.5
(22) Date of filing: 17.06.2025
(51) Int. Cl.: B60N 2/90, F16K 7/04, F16K 7/07

(54) **AIRFLOW CONTROL SYSTEM**

(30) Priority: 28.06.2024 US 202463665568 P; 13.02.2025 US 202519052544
(71) Applicant: Lear Corporation, Southfield, MI 48033 (US)
(72) Inventor: Blair, Samuel, Rochester, MI, 48306 (US); Cloutier, Timothy, Clawson, MI, 48017 (US); Abdella, David, Farmington, MI, 48336 (US)
(74) Representative: Grünecker Patent- und Rechtsanwälte PartG mbB

(57) **Abstract**

An airflow control system includes a plurality of airflow passages. Each of the airflow passages splits into at least first and second sub-passages. The first sub-passages provides a first group of sub-passages and the second sub-passages provide a second group of sub-passages. First and second fluidic clamps control airflow through the first and second groups of sub-passages. The first group of sub-passages extends through the first fluidic clamp and the second group of sub-passages extends through the second fluidic clamp. Actuation of the first fluidic clamp prevents airflow through the first group of sub-passages and, independent of the first fluidic clamp, actuation of the second fluidic clamp prevents airflow through the second group of sub-passages.

## Description

### BACKGROUND

Automobile seats may include a massage assembly that has inflatable cells or bladders. The bladders are connected via fluid supply lines to a valve arrangement. A pump provides air to the valve arrangement, which directs the air to the bladders to be inflated. The bladders may be inflated and deflated in a sequence to provide a desired massage effect to the seat occupant.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a seat for an automobile.
Figure 2 illustrates a seat bladder system of the seat.
Figure 3 illustrates an airflow control system for controlling airflow to the bladders in a seat.
Figure 4 illustrates a fluidic clamp in a low pressure state permitting airflow through a sub-passage.
Figure 5 illustrates a fluidic clamp in a high pressure state blocking flow through a sub-passage.
Figure 6 illustrates a fluidic clamp in a low pressure state permitting airflow through a sub-passage.
Figure 7 illustrates a fluidic clamp in a high pressure state blocking flow through a sub-passage.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

"One or more" includes a function being performed by one element, a function being performed by more than one element, *e.g.*, in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

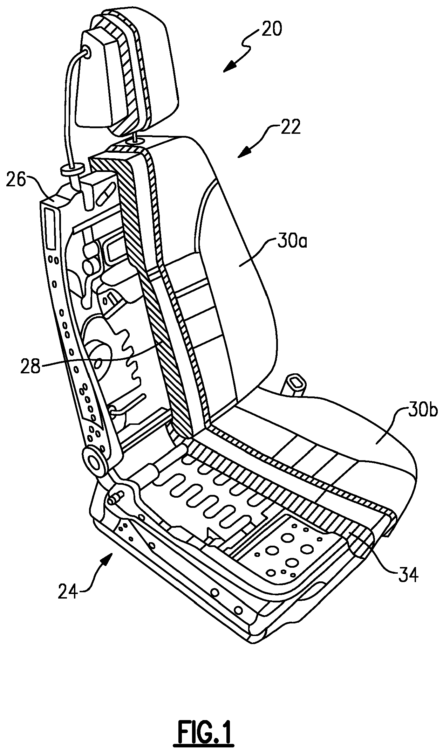

Figure 1 illustrates an example seat 20 for an automobile. In this example, the seat 20 includes a seat back 22 and a seat base 24. A seat frame 26 supports a cushion 28 in the seat back 22, which is covered by trim 30a. In the seat base 24, the frame 26 supports a bottom seat cushion 34, which is covered by seat trim 30b. Although the example seat 20 is for an automobile, it is to be understood that the examples are applicable to other types of vehicles, such as but not limited to, a motorcycle, a watercraft, an aircraft, or a locomotive.

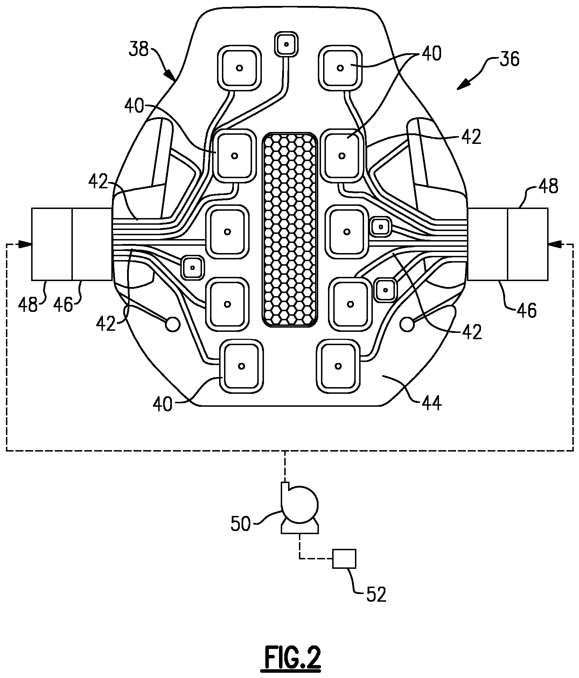

Figure 2 illustrates selected portions of a seat system 36 for incorporation into the seat 20. The seat system 36 includes a bladder system 38 that includes one or more inflatable bladders 40 and air channels 42 in fluid communication with the bladders 40 for inflating and deflating the bladders 40, e.g., for occupant massage and/or comfort. The bladders 40 are formed from polymer films (e.g., thermoplastic urethane) that are welded together to form expandable cells. The bladders 40 are attached with one or more polymer film carrier substrates 44.

The channels 42 are attached to an airflow control system 46, which is in fluid communication with a valve bank 48. The valve bank 48 and airflow control system are fluidly connected with one or more pumps 50. A processor 52 is connected with the pump 50, to control operation thereof. The processor 52 may also be connected with the valve bank 48 to open and close the valves of the bank 48 to selectively provide air to the bladders 40 via the channels 42.

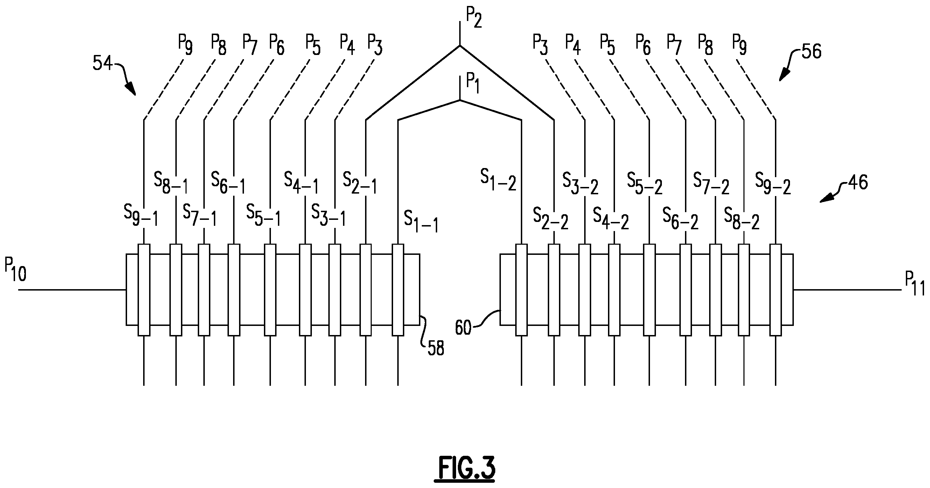

Figure 3 schematically illustrates an example of the airflow control system 46, which in this case is configured for nine valves of the valve bank 48. That is, each valve in the valve bank 48 is fluidly connected with one primary airflow passage, e.g., a tube, such that actuation of a valve controls airflow through the respective primary airflow passage that is connected with that valve. For instance, when a valve is actuated to an inflate position and the pump 50 is activated, air is provided through the primary airflow passage connected with that valve, to inflate one or more of the bladders 40. Conversely, when the valve is actuated to a deflate position, air is permitted to exhaust through the primary airflow passage from the one or more bladders 40 for deflation. It is to be appreciated that the number of valves in the valve bank 48, and thus the number of primary airflow passages, could be varied.

In order to increase the number of bladders 40 that each valve controls for inflation and deflation, each primary airflow passage splits into at least first and second sub-passages. That is, each sub-passage is fluidly connected with a single bladder 40 such that each primary airflow passage is capable of inflating and deflating at least two bladders 40. For instance, in Figure 3 primary airflow passage P_{X} splits into two sub-passages S_{X-Z} and S_{X-Y}, where X is from 1 to 9 and represents the number of the primary airflow passage and Z and Y are 1 or 2 and represent the first or second the sub-passage. As an example, primary airflow passage P₂ splits into sub-passages S₂₋₁ and S₂₋₂. It is to be appreciated that the primary airflow passages P_{X} could alternatively split into more than two sub-passages, such as three, four, or five sub-passages, in order to fluidly connect with a greater number of bladders 40. The first sub-passages S_{X-1} provide a first group 54 of sub-passages and the second sub-passages S_{X-2} provide a second group 56 of sub-passages. For instance all of the first sub-passages S_{X-1} are arranged together in close proximity to each other and all of the second sub-passages S_{X-2} are arranged together in close proximity to each other.

As also depicted in Figure 3, the system 46 includes first and second fluidic clamps 58/60. As will be described in more detail below, each fluidic clamp is a pneumatic clamp that includes an inflatable bag that serves to control airflow through the first and second groups 54/56 of sub-passages. For instance, the first group 54 of sub-passages extends through the inflatable bag of the first fluidic clamp 58 and the second group 56 of sub-passages extends through the inflatable bag of the second fluidic clamp 60. Actuation of the first fluidic clamp 58 prevents airflow through the first group 54 of sub-passages and, independent of the first fluidic clamp 58, actuation of the second fluidic clamp 60 prevents airflow through the second group 56 of sub-passages. For instance, the fluidic clamps 58/60 are fluidly connected to respective control valves in the valve bank 48 via control airflow passages P₁₀ and P₁₁, respectively. Actuation of the control valves provides air to the clamps 58/60 to selectively actuate the clamps 58/60 to turn the groups 54/56 of sub-passages ON or OFF with respect to air flow.

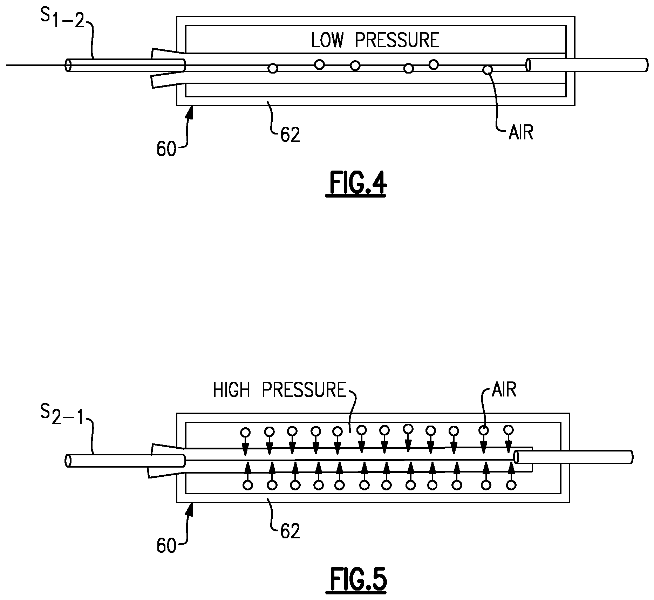

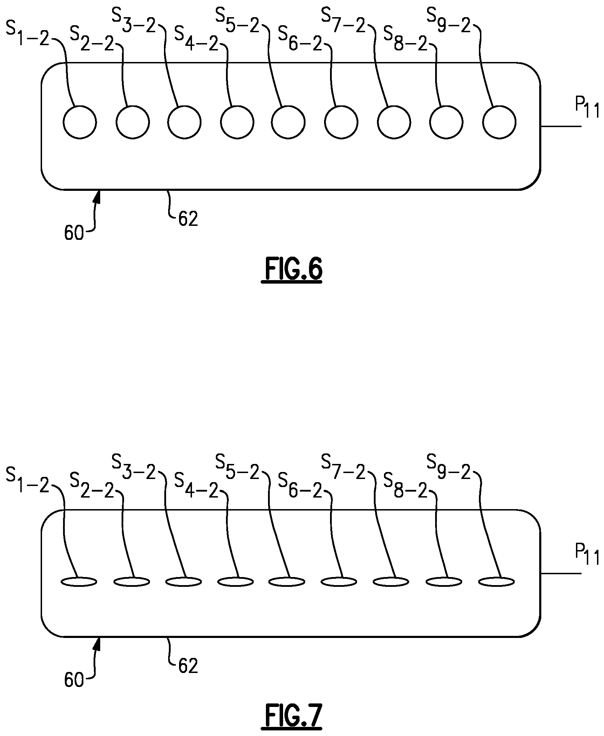

Figure 4 illustrates a representative sectioned view along the length of sub-passage S₁₋₂ that runs through the clamp 60. The clamp 60 (and clamp 58) is comprised of an inflatable bag 62. In Figure 4, the inflatable bag 62 of the clamp 60 is unpressurized, e.g., no air is provided through control airflow passage P₁₁ into the bag 62. In this low pressure state, the sub-passage S₁₋₂ is uncollapsed and thus airflow is permitted through the sub-passage S₁₋₂ to (or from) the downstream bladder 40. Conversely, as shown in Figure 5, the inflatable bag 62 of the clamp 60 is pressurized, e.g., air is provided through control airflow passage P₁₁ into the bag 62. In this high pressure state, the air pressure in the bag 62 collapses the sub-passage S₁₋₂ and thus blocks airflow through the sub-passage S₁₋₂ to (or from) the downstream bladder 40. Figure 6 shows a representative view taken approximately perpendicular to the lengths of the sub-passages, wherein the bag 62 is in the low pressure state as in Figure 4, and Figure 7 shows a representative view taken approximately perpendicular to the lengths of the sub-passages, wherein the bag 62 is in the high pressure state as in Figure 5.

The fluidic clamps 58/60 permit each valve in the valve bank 48 to control a pair of bladders and provide three unique bladder inflation configurations. For instance, when the valve associated with primary airflow passage P_{X} is actuated to an inflate position and both clamps 58/60 are in the low pressure state, airflow is permitted through both sub-passages S_{X-1} and S_{X-2} to simultaneously inflate a pair of bladders 40. When the valve associated with primary airflow passage P_{X} is actuated to an inflate position with the clamp 58 are in the low pressure state and the clamp 60 in the high pressure state, airflow is permitted through sub-passage S_{X-1} to inflate the first bladder 40 of the pair and airflow is blocked through sub-passage S_{X-2} such that the second bladder 40 of the pair does not inflate. When the valve associated with primary airflow passage P_{X} is actuated to an inflate position with the clamp 58 in the high pressure state and the clamp 60 in the low pressure state, airflow is permitted through sub-passage S_{X-2} to inflate the second bladder 40 of the pair and airflow is blocked through sub-passage S_{X-1} such that the first bladder 40 of the pair does not inflate. In this manner, each valve of the valve bank 48 can individually control each of two bladders and is able to provide three unique bladder inflation configurations, including 1) pair of bladders inflated, 2) first bladder inflated/second bladder not inflated, and 3) second bladder inflated/first bladder not inflated. In contrast, if the clamps 58/60 were excluded, the valve would not be able to control the individual inflation of each of the two bladders and the two bladders could only be inflated in unison. The clamps 58/60 thus provide the ability to use fewer valves and obtain improved bladder performance versus systems without clamps that utilize a 1:1 or 1:2 ratio of valves to bladders.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A system comprising:
a plurality of airflow passages, each of the airflow passages splitting into at least first and second sub-passages, the first sub-passages providing a first group of sub-passages and the second sub-passages providing a second group of sub-passages; and
first and second fluidic clamps controlling airflow through the first and second groups of sub-passages, the first group of sub-passages extending through the first fluidic clamp and the second group of sub-passages extending through the second fluidic clamp, actuation of the first fluidic clamp preventing airflow through the first group of sub-passages and, independent of the first fluidic clamp, actuation of the second fluidic clamp preventing airflow through the second group of sub-passages.

2. The system as recited in claim 1, wherein each of the first and second fluidic clamps is a pneumatic clamp.

3. The system as recited in claim 2, wherein each of the first and second fluidic clamps includes an inflatable bag disposed around, respectively, the first and second groups of sub-passages.

4. The system as recited in claim 1, wherein the first and second fluidic clamps include, respectively, first and second inflatable bags, with the first sub-passages extending through the first inflatable bag and the second sub-passages extending through the second inflatable bag.

5. The system as recited in claim 4, further comprising first and second fluidic control passages independently connected with, respectively, the first and second inflatable bags.

6. The system as recited in claim 1, further comprising a plurality of valves upstream of the airflow passages, each of the valves controlling airflow to one of the airflow passages.

7. The system as recited in claim 1, further comprising a plurality of inflatable bladders, each of the first and second sub-passages connected with a different one of the inflatable bladders.

8. The system as recited in claim 1, wherein the first and second fluidic clamps include, respectively, first and second inflatable bags, with the first sub-passages extending through the first inflatable bag and the second sub-passages extending through the second inflatable bag, and first and second fluidic control passages independently connected with, respectively, the first and second inflatable bags.

9. The system as recited in claim 8, further comprising a plurality of valves upstream of the airflow passages, each of the valves controlling airflow to one of the airflow passages.

10. The system as recited in claim 9, further comprising a plurality of inflatable bladders, each of the first and second sub-passages connected with a different one of the inflatable bladders.

11. A method comprising:
providing an airflow to a plurality of airflow passages, each of the airflow passages splits into at least first and second sub-passages, the first sub-passages provide a first group of sub-passages and the second sub-passages provide a second group of sub-passages, each of the first and second sub-passages connected with a different one of a plurality of inflatable bladders; and
inflating one or more of the inflatable bladders by selectively actuating first and second fluidic clamps, the first group of sub-passages extend through the first fluidic clamp and the second group of sub-passages extend through the second fluidic clamp, activation of the first fluidic clamp preventing airflow through the first group of sub-passages and, independent of the first fluidic clamp, activation of the second fluidic clamp preventing airflow through the second group of sub-passages.

12. The method as recited in claim 11, wherein each of the first and second fluidic clamps includes an inflatable bag disposed around, respectively, the first and second groups of sub-passages.

13. The method as recited in claim 11, wherein the first and second fluidic clamps include, respectively, first and second inflatable bags, with the first sub-passages extending through the first inflatable bag and the second sub-passages extending through the second inflatable bag.

14. The method as recited in claim 13, wherein the activation of the of the first fluidic clamp includes selectively independently providing a first control fluid to a first fluidic control passage connected with the first inflatable bag, and the activation of the second fluidic clamp includes selectively independently providing a second control fluid to a second fluidic control passage connected with the second inflatable bag.

15. The method as recited in claim 11, further comprising controlling the airflow using a plurality of valves upstream of the airflow passages, each of the valves controlling airflow to one of the airflow passages.
